(19) Europäisches Patentamt
European Patent Office
Office européen des brevets

(11) **EP 1 930 071 A1**

(12) **EUROPÄISCHE PATENTANMELDUNG**

(43) Veröffentlichungstag:
**11.06.2008 Patentblatt 2008/24**

(51) Int Cl.:
**B01J 2/02** *(2006.01)*

(21) Anmeldenummer: 06125514.7

(22) Anmeldetag: **06.12.2006**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK RS**

(71) Anmelder: **ECKA Granulate GmbH & Ko. KG 60763 Fürth (DE)**

(72) Erfinder: **Dopler, Martin 8010 Graz (AT)**

(74) Vertreter: **Neidl-Stippler, Cornelia Patentanwältskanzlei Neidl-Stippler Rauchstrasse 2 81679 München (DE)**

(54) **Verfahren zur Herstellung von Partikeln aus fliessfähigem Material und Verdüsungsanlage dafür**

(57) Die Erfindung betrifft ein Verfahren zur steuerbaren Herstellung von Partikeln aus fliessfähigem Material mit: Zuführen eines fliessfähigen Materials (10) durch mindestens eine Materialleitung (14) mit einem offenen Austrittsende in eine Gasdruckkammer (18) mit einer Öffnung (20), die direkt in einen Verdüsungsraum öffnet, Herstellen eines Gasdrucks in der Gasdruckkammer mit Öffnung, wobei im Bereich des Austrittsendes der Materialleitung das austretende Material durch das unter Druck stehende Gas (12) zerstäubt wird; Austritt der zerstäubten Material/Gas-Mischung unter kritischen Bedingungen aus der Öffnung der Gasdruckkammer unter weiterer Expansion der zerstäubten Gas/Material-Mischung in einen Verdüsungsraum unter Verfestigung der Schmelze und Sammeln der so hergestellten Materialpartikel sowie eine Anlage zur Durchführung des Verfahrens

FIG. 4

**EP 1 930 071 A1**

**Beschreibung**

Die Erfindung betrifft ein Verfahren zur Herstellung von Partikeln aus fliessfähigem Material sowie eine Anlage zu seiner Durchführung.

Die Herstellung von Partikeln aus fliessfähigem Material ist für Kunststoffe, Naturstoffe, Gläser, Suspensionen und Emulsionen als auch Metalle bekannt. Dabei besteht ein ständig wachsender Bedarf an Pulvern derartiger Materialien kleiner Korngröße. Unter Korngrösse werden hier Partikelgrössen im Bereich von d50<1000 μm, je nach Anwendung und Material auch d50< 200 μm und bei speziellen Anwendungen d50<50 μm verstanden.

Unter fliessfähigem Material wird im Zusammenhang mit der Erfindung Suspensionen, Emulsionen, Lösungen, Schmelzen, Flüssigkeiten verstanden.

Als zu verdüsendes Material bietet sich schmelzfähiger Kunststoff an - Kunststoffgranulate werden für Spritzgussmaschinen etc. benötigt. Ferner fällt verdüsungsfähiges Material unter anderem aus Recycling Material an und das so hergestellte Granulat kann in einfacher Weise weiterverwendet werden - bspw. als Zuschlagstoff für Zement od. dgl. Andere geeignete Materialien sind Metalle, wie Zn, Ni, AI, Ag, Mg, Si, Ca, Cu, Ni, Mo, Pb, Ti, W, Fe, Co, Cr, Mn, und insbesondere auch deren Legierungen. Metalle in Pulverform sind für die verschiedensten Anwendungen erwünscht, bspw. für Metallguss, wie Spritzguss, für Verbundmaterialien, Sintern, Katalysatoren, Anstrichstoffe, Farben.

Nach diesem Verfahren können auch Gläser und schmelzfähige Keramik verdüst werden. Es können aber auch schmelzfähige Naturstoffe, wie Fette oder Wachse, die bei Umgebungstemperatur fest sind, verarbeitet werden.

Diese Verfahren produzieren Partikel, die auch als Pulver, Granulat, Gries od. dgl. bezeichnet werden kann. Derartige Pulver werden bspw. in Lebensmittelanwendungen; Schmiermittelherstellung, Waschmittel sowie für Spritzgusstechniken, die Herstellung von Legierungen, Sinterverfahren, Verbundmaterialien, Katalysatoren, Anstrichstoffe und Lacke etc. eingesetzt. Der Markt für diese Anwendungen hat hohen Bedarf an großen Mengen Pulver geringer Korngröße zu geringen Kosten. Bisher wurden derartige Pulver unter anderem dadurch hergestellt, dass - wie bspw. in der WO 01/62987 beschrieben, fliessfähiges Materialien wie oxidische Schlacken, Gläser, durch Hochdruck-Gasexpansion in einen Raum schlagartig verdüst oder anderweitig zerstäubt werden - beispielsweise durch rotierende Platten, die die auftreffenden Tröpfchen wegschleudern und so zerkleinern (Rotating Disc Method) oder aber auch "Roller Atomization" - Rollenzerstäubung - wobei geschmolzene Metalltröpfchen auf sich drehende Rollen auftreffen, von diesen weggeschleudert werden und sich auf der Flugbahn verfestigen Ein weiteres typisches Verfahren ist das Wasserzerstäuben. In größerem Maßstab wird hauptsächlich das Gaszerstäuben eingesetzt. Dazu werden Anlagen, wie Laval-Anlagen, eingesetzt, in denen das flüssige fliessfähige Material zunächst stark beschleunigt und danach unter weiterer starker Beschleunigung auf hohe Geschwindigkeit an der Anlagenöffnung in einen Raum schlagartig expandiert und so zerstäubt (ein typisches Verfahren ist in der AT 2987350 A1 beschrieben). Das fliessfähige Material wird bevorzugt bei der schlagartigen Expansion an der Düsenöffnung durch Gasströme weiter verteilt und dadurch feinverteilte Materialtröpfchen erhalten, die sich beim Abkühlen verfestigen und so das Pulver bilden. Somit bestehen die bekannten gattungsgemäßen Verfahren darin, fliessfähiges Material nach Austritt aus einer Anlage mit Gas zu kontaktieren und gleichzeitig schlagartig zu expandieren. Ein weiteres Verfahren ist aus der EP 1474224 B1 bekannt.

Generell bestehen bei der gasgestützten Zerstäubung zwei verschiedene Verfahrensvarianten: außenmischende und innenmischende Verfahren.

A Außenmischende Verfahren

Hierbei tritt fliessfähiges Material durch Schwerkraft aus einem Behälter aus (meist beim open- jet -Verfahren) oder wird durch die Gasströmung angesaugt (meist beim Prefilming Verfahren oder beim direkten Verfahren):

Außenmischende Verfahren liefern Pulver mit geringem Oxidgehalt, was besonders erwünscht ist, falls ein in der flüssigen Phase reaktionsfreudiges (bspw. Oxidationsanfälliges) Material verdüst wird.

Nachteilig bei außenmischenden Verfahren ist der hohe Energieverbrauch. Bei einer Aluminiumverdüsung wurden bspw. 8 kg Luft von ca 600 °C unter einem Druck von >10bar benötigt, um 1 kg Aluminium mit d50 < 25μm herzustellen.

A 1. Open (Free) Jet- Verfahren:

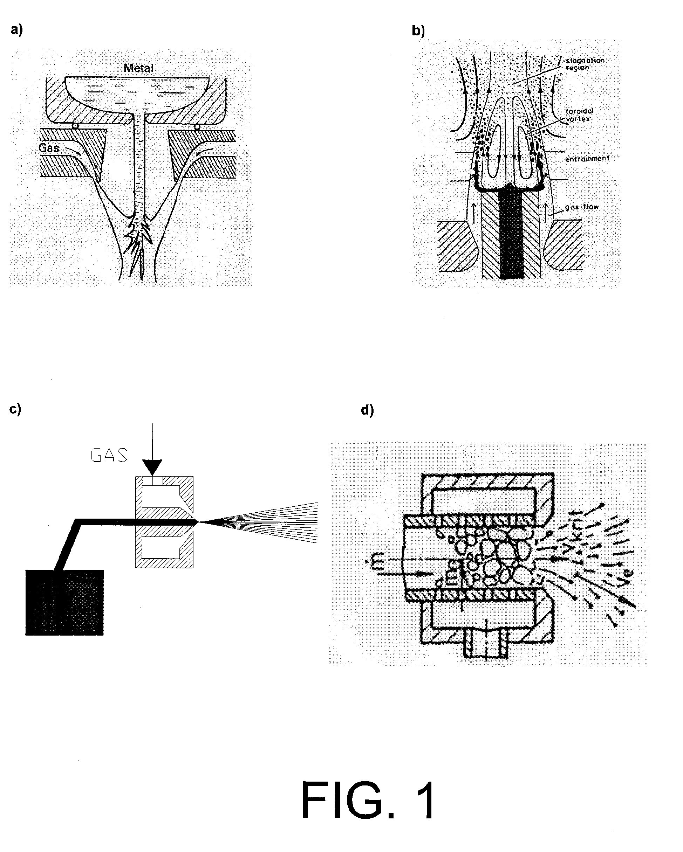

Es wird ein freier Schmelzestrahl mit Gas hoher Geschwindigkeit kontaktiert, die Impuls- und Scherkräfte sorgen für eine Atomisierung der Fliessfähiges Materials, dessen feine Tröpfchen erstarren (Fig. 1 a)

A 2. Prefilming Verfahren: z.b. US-Patent 2.968.062

Die Primäroberfläche des fliessfähigen Materials wird vor dem Austritt unter Zuhilfenahme gasdynamischer Kräfte in einen Film zerteilt, der vom Gasstrahl dann zu feinen Tröpfchen zerstäubt wird (Fig. 1b)

# EP 1 930 071 A1

A 3. Direktes Verfahren (Close Coupled Atomization): z.b. US-Patent 1.659.291

Am Anlagenaustritt wird das fliessfähige Material direkt von einem Gasstrahl erfasst und zerstäubt (Abb. 1 c).

B. Innenmischende Verfahren

Hier werden in einer Gasdruckkammer Gas und fliessfähiges Material in oder vor der Anlage in intensiven Kontakt gebracht und dann die Mischung durch die Anlage zerstäubt. Ein typisches Verfahren ist in der DE 2.627.880 beschrieben.

Innenmischende Verfahren benötigen weniger Energie als außenmischende. Nachteilig ist, dass innenmischende Verfahren bspw. bei oxidationsanfälligen Schmelzen einen hohen Oxidgehalt und hohe spezifische Oberfläche bewirken, was insbesondere bei ultrafeinen Pulvern unerwünscht ist und auch bei vielen Anwendungen (bspw. in der Pastenindustrie) Probleme bereitet. Generell wird aufgrund der langen Kontaktzeit Gas/fliessfähiges Material die Bildung von Reaktionsprodukten zwischen Gas und dem fliessfähigen Material gefördert.

Ausserdem führen derartige Vorrichtungen eher zum Verstopfen oder (bei Schmelzen) zum Einfrieren der Düsen.

Es ist demzufolge Aufgabe der Erfindung, eine Verdüsung zu ermöglichen, das Pulver regelbarer Grössenverteilung mit der Qualität außenmischender Verfahren energiesparender erzeugt.

Die Aufgabe wird durch ein Verfahren mit den Merkmalen des Patentanspruches 1 sowie eine Anlage mit den Merkmalen des Patentanspruches 8 gelöst. Vorteilhafte Weiterbildungen ergeben sich aus den abhängigen Ansprüchen.

Es wird also ein kontinuierlich arbeitendes effizientes Verfahren zur Herstellung von Pulvern aus fliessfähigem Material geschaffen, das es ermöglicht, bei geringerem Energieverbrauch Pulver zu erzielen, welche in etwa den chemisch/metallurgischen Eigenschaften der durch außenmischende Verfahren hergestellten Pulver entsprechen.

Dabei erfolgt das Zuführen eines fliessfähigen Materials durch mindestens eine Materialleitung mit einem offenen Austrittsende in eine Gasdruckkammer mit einer Öffnung, die direkt in einen Verdüsungsraum öffnet, wobei durch den regelbaren Gasdruck in der Gasdruckkammer mit Öffnung im Bereich des Austrittsendes der Materialleitung das austretende Material durch das unter Druck stehende Gas zerstäubt wird die so zerstäubten Material/Gas-Mischung unter kritischen Bedingungen aus der Öffnung der Gasdruckkammer unter weiterer Expansion der zerstäubten Gas/Material-Mischung in einen anschliessenden Verdüsungsraum unter Verfestigung der Schmelze verdüst und die so hergestellten Materialpartikel gesammelt werden.

Das fliessfähige Material kann bspw. eine Lösung, Schmelze, Schlamm, Suspension, Emulsion sein, welche dann zu einer regelbaren Pulvergrössenverteilung verarbeitet wird.

Bspw. ist das fliessfähige Material schmelzfähiger Kunststoff; Metall, insbesondere ein unedles Metall oder Buntmetall sowie Legierungen derselben; ein Naturstoff, Schlacke.

Bevorzugt ist das Austrittsende der Materialleitung in einem bestimmten Abstand zur Gasdruckkammeröffnung anordenbar. Durch den Abstand ist die Durchmischung Gas/Material vor dem Austritt aus der Gasdruckkammeröffnung regelbar.

Bevorzugt wird das fließfähige Material in der Materialleitung unter Druck zugeführt wobei die Materialzuführgeschwindigkeit entscheidend für die Produktionsrate ist. Die Partikelgrössenverteilung des Pulvers kann über das Druckverhältnis des Materialdrucks in der Materialleitung und des Gasdrucks in der Gasdruckkammer $p_g$ eingestellt werden. Die Produktionsmenge Pulver/Zeiteinheit und/oder die Partikelgrößenverteilung kann durch Einstellung des Abstands x zwischen dem Austrittsende der Materialleitung und der Gasdruckkammeröffnung geregelt werden.

Es kann günstig sein, dass die Expansion aus der Gasdruckkammeröffnung in einen Raum niedrigerer Temperatur als des fliessfähigen Materials durchgeführt wird. Dies ist insbesondere dann sinnvoll, wenn das Material einen niedrigen Schmelzpunkt hat oder aber vermieden werden soll, das Flüssigkeitströpfchen wieder koaleszieren oder sich im Bereich der Wände festsetzen.

Als Gas eignet sich je nach verdüstem Material dasjenige, das Reaktionen verringert oder aber zulässt - je nach Pulver, bspw. kann das Gas ein Inertgas, Edelgas, Stickstoff, Kohlendioxid sein.

Die Erfindung betrifft auch eine Verdüsungsanlage zur Durchführung des Verfahrens mit:

- mindestens einer Materialleitung ;
- mindestens einer offenen Gasdruckkammer, deren mindestens eine Öffnung zum Verdüsungsraum weist
- mindestens einer Gasleitung, durch die Gas zur Aufrechterhaltung des Gasdrucks in der Gasdruckkammer regelbar zugeführt wird,

wobei Gaszuführleitung(en) und die Materialleitung(en) im wesentlichen innerhalb der offenen Gasdruckkammer enden und x der Abstand, gemessen zwischen dem Ende der Materialleitung und der mindestens einen Öffnung der Gasdruckkammer ist.

3

Bei der Anlage kann der Abstand x einstellbar sein.

Es können auch mehrere voneinander getrennt regelbare Gaszuführkanäle vorgesehen sein. Schliesslich können eine oder mehrere Gasleitungen Gasleiteinbauten aufweisen.

Auch die Leitungsgeometrie kann den Gegebenheiten - materialspezifisch oder anlagenspezifisch - angepasst werden und runde, konvergierende, konvergent-divergente, ovale, mehreckige oder schlitzförmige Gas- und/oder Materialleitungsgeometrien beinhalten.

Da neben der Relativgeschwindigkeit zwischen Flüssigkeit und Gas die Gasdichte ein entscheidender Faktor für die Herstellung feiner Tröpfchen ist, kann durch die erfindungsgemäße Anordnung ein erhöhter Gasdruck an der Grenzfläche zwischen Gas/Flüssigkeit erzielt werden, was zu einem erheblich verbesserten ZerstäubungsErgebnis mit feinerem Pulver führt als die bisher bekannten außenmischenden Anlagen - bzw. wird das gleiche Ergebnis bei erheblicher Energieersparnis erzielt.

Vorteile durch die Erfindung:

1) Bei der Verdüsung kann gegenüber bekannten aussenmischenden Verfahren durch Verringerung der für die Verdüsung notwendigen Gasmenge eine große Energieersparnis erzielt werden.

2) Durch Auswahl einer geeigneten Gasmengenflusses zum Materialfluss kann die Korngrößenverteilung verschoben werden - der Mittelwert der Korngröße variiert. Ferner muss erheblich weniger Gas eingesetzt werden, als bei den Gaszerstäubungsverfahren nach dem Stand der Technik notwendig.

Bei der erfindungsgemäßen Anlage wird eine offene Gasdruckkammer mit einem Abstand x zwischen dem Ende der Materialleitung und der Gasdruckkammeröffnung gebildet, aus der ein darin gebildeter Gas/Flüssigkeitsnebelstrom in kritischer Strömung aus der Gasdruckkammeröffnung in den Verdüsungsraum austritt und weiter expandiert. Dieser Nebel tritt mit kritischer Geschwindigkeit aus der Gasdruckkammeröffnung aus, sodass die Kontaktzeit Gas/fliessfähiges Material kürzer als es bei innenmischenden Verfahren möglich ist, gehalten wird.

Durch diese kurze Mischungszeit kann das Auftreten von Reaktionsprodukten Gas/fliessfähiges Material erheblich verringert werden.

Das Durchsatzverhältnis $m'_{gas}/m'_{liq}$ lässt sich durch den Abstand x zwischen der Materialleitungsaustritt und der Gasdruckkammeröffnung einstellen (kritische Strömung der austretenden Mischung); je grösser x ist, desto geringer ist der Flüssigkeitsdurchsatz.

Als $x_{min}$ wird jener Abstand definiert, bei dem gerade noch eine kritische Strömung am Auslass entsteht. $x_{max}$ ist jener maximale Abstand, bei dem noch kein Kontakt des (zerstäubten) fliessfähigen Materials mit der Gaskammeröffnung stattfindet. Dieser Kontakt würde zu einem Zerstören oder Verstopfen der Gasdruckkammeröffnung führen.

$x_{min}$ und $x_{max}$ sind abhängig von den Austrittsdimensionen (d und D) sowie von den Gas- sowie Flüssigkeitsvordrucken $p_{gas}$ und $p_{liq}$.

$x_{min}$ und $x_{max}$ können experimentell problemlos ermittelt werden. So lässt sich erfindungsgemäß der Durchsatz an fliessfähigem Material durch Einstellung eines geeigneten Abstands regeln.

Das Durchsatzverhältnis ist auch abhängig vom Verhältnis Gas- ($p_{gas}$) zu Flüssigkeitsvordruck ($p_{liq}$) - je höher $p_{gas}/p_{liq}$, desto geringer ist der Flüssigkeitsdurchsatz, da das unter hohem Druck zutretende Gas den Flüssigkeitsaustritt verhindert.

Bei einer Ausführungsform expandiert die in der Gasdruckkammer entstehende innige Mischung von fliessfähigem Material/Gas mit einer Geschwindigkeitserhöhung der Flüssigkeitströpfchen auf etwa das 30 - 100 fache der Fördergeschwindigkeit aus der Anlage in einen Verdüsungs/Auffangbehälter. Die Gasteilchen beschleunigen aufgrund ihrer geringen Masse noch erheblich stärker als die Materialteilchen und sorgen so für Aufweitung des austretenden Strahls und verbesserte Zerstäubung.

Zur Verbesserung der Zerstäubung kann die Expansion durch Verdüsen der Materialmischung in einen Raum erniedrigten Drucks durchgeführt werden. Es ist auch möglich, die Expansion in einen gekühlten Raum durchzuführen, um das Abkühlen und Verfestigen des fliessfähigen Materials zu beschleunigen. Dadurch werden unerwünschte Reaktionen des fliessfähiges Materials im flüssigen Zustand weiter eingeschränkt - sowohl chemischer Art, als auch durch Tröpfchen-Koaleszenz oder Abscheiden von Tröpfchen an Anlagenoberflächen. Selbstverständlich kann das Verfahren auch unter Schutzgas durchgeführt werden.

Die verbesserte Zerstäubung könnte man wie folgt erklären:

Der für den Sekundärtropfenzerfall wesentliche Parameter ist die kritische Weber-Zahl, die sich wie folgt de-

finiert: $We_{krit} = \dfrac{\rho_{gas} * (v_{gas} - v_{drop})^2 * d_{drop}}{\sigma} > 13$ für plötzliche Beschleunigung bzw.

$We_{krit} = \dfrac{\rho_{gas} * (v_{gas} - v_{drop})^2 * d_{drop}}{\sigma} > 22$ für konstante Beschleunigung des Materialtropfens.

Daraus ergibt sich zwangsläufig, dass eine erhöhte Dichte am Zerstäubungspunkt (also ein erhöhter Gasdruck) angestrebt werden muss, um ein besseres (feineres) Ergebnis zu erzielen.

Aus dem Gasreservoir expandiert das (kalte oder heiße) Gas bis zum Auftreffen auf die Flüssigkeit bzw. bis zum Ausströmen aus der Anlage mit der Gesetzmäßigkeit: $p_{crit} = p_R \left(\dfrac{2}{\kappa + 1}\right)^{\frac{\kappa}{\kappa - 1}}$ bzw.

$$\rho_{crit} = \rho_R \left(\dfrac{2}{\kappa + 1}\right)^{\frac{1}{\kappa - 1}}$$

Das bedeutet, die Geometrie der Anlage sowie der gas- und flüssigseitige Ruhedruck müssen dergestalt ausgeführt sein, dass sich an der Grenzfläche zwischen Gas und Flüssigkeit der kritische Druck $p_{crit}$ mit der zugehörigen Gasdichte $\rho_{crit}$ ausbildet. An dieser Stelle strömt das Gas mit der kritischen Geschwindigkeit, der lokalen Schallgeschwindigkeit (Ma = 1). Je höher diese Geschwindigkeit und je höher die Gasdichte $\rho_{crit}$, desto besser ist das zu erwartende Zerstäubungsergebnis.

Beim primären Auftreffen des Gasstroms auf den Materialstrom muss also davon ausgegangen werden dass das fliessfähige Material zuerst in größere Tropfen zerteilt wird ("Primärzerstäubung"), die dann wiederum einem Sekundärtropfenzerfall unterliegen, welcher nach oben erwähntem Weberzahlkriterium unter begünstigten Bedingungen (erhöhte Gasdichte) stattfinden muss.

Die Zeit, die ein Tropfen benötigt, um in Sekundärtropfen zu zerfallen, kann wie folgt ausgedrückt werden:

$$t_{break-up} = \left(\dfrac{\rho_{liq}}{\rho_{gas}}\right)^{0,5} \dfrac{d_{drop,0}}{v_{gas} - v_{drop}} * A \qquad Oh = \dfrac{\mu_{liq}}{(d_{drop} * \rho_{liq} * \sigma)^{0,5}}$$

A ist ein Parameter, der von der Ohnesorgezahl Oh abhängig ist und von ca. A = 4 bei niedrigen Ohnesorgezahlen (Oh < 0,1) ansteigt auf A = 10 für Oh = 3,5.

Geht man gleichzeitig davon aus, dass sich - statistisch gesehen - ein Tropfen mit der halben Gasgeschwindigkeit mitbewegt ($v_{drop}$= ½ $v_{gas}$) lassen sich die Größen-Verhältnisse innerhalb der Anlage beispielhaft wie folgt beschreiben:

Kritische Gasgeschwindigkeit bei Raumtemperatur: $v_{Luft}$=333m/s Tropfenzerfallszeit für einen 100$\mu$m-Tropfen bei p = 1 bar: 0,00016 sec Weg, den der Tropfen in dieser Zeit durchläuft bei p = 1 bar: 24 mm Tropfenzerfallszeit für einen 100$\mu$m-Tropfen bei p = 5 bar: 0,00007 sec Weg, den der Tropfen in dieser Zeit durchläuft bei p = 5 bar: 11 mm

Aus den gängigen Theorien der Gasdynamik kann abgeleitet werden dass für einen Ringspalt der Dicke s die Länge der Kernzone (das ist jene Zone, in der maximale Geschwindigkeit herrscht) direkt proportional zu s ist.

Bei der neuen Düse muss für diese Berechnung nicht mehr der Ringspalt s hergenommen werden, vielmehr kann der Gasdüsendurchmesser D als entscheidender Faktor verwendet werden. Für runde Düsen ergibt sich damit eine Kernzonenlänge, die mindestens um das 3,5-fache länger ist als für herkömmliche außenmischende Düsen.

Aus den drei Zielen

→ Höhere Zerfallswahrscheinlichkeit durch erhöhte Gasdichte
→ Kürzere Tropfenzerfallszeit bei erhöhtem Druck
→ Längere Kernzone

ergibt sich, dass bei der erfindungsgemäßen Anlage eine kritische Strömung an der Gasdruckkammeröffnung zu erzielen ist.

Als Gase eignen sich die dem Fachmann für das zu verdüsende Material als geeignet bekannten Gase - falls Oxidation nur eine untergeordnete Rolle spielt, kann das Gas preiswerte Luft sein - es kann aber auch mit Inertgas, wie Edelgas oder jedem anderen Gas, das mit dem zu verdüsenden Material nicht in nennenswertem Maß reagiert - bspw. Stickstoff oder Argon - gearbeitet werden. Auch Wasserdampf oder $CO_2$ können geeignet sein.

Bei einer typischen Anwendung des Verfahrens werden Schmelzepartikel des innigen Gemischs auf die 5 - 100fache Geschwindigkeit während der explosionsartigen Expansion beschleunigt, wobei sie sich verfestigen. Eine typische Partikelgeschwindigkeit im Gemisch beträgt 0,01 m/sec und wird sodann auf 50 - 200 m/sec beim Verdüsen beschleunigt.

Weitere Ziele, Merkmale und Vorteile ergeben sich aus der Betrachtung der nachfolgenden Beschreibung und den Ansprüchen gemeinsam mit den begleitenden Zeichnungen. Zum vollständigeren und kompletteren Verständnis der Natur und der Ziele der Erfindung wird auf die Zeichnungen Bezug genommen, in denen zeigt:

Fig. 1a - d eine schematische Darstellung der üblichen Verdüsungsverfahren

Fig. 2 eine schematische Darstellung einer erfindungsgemäßen Anlage;

Fig. 3 eine schematische Schnittansicht durch eine erfindungsgemäße Anlage an einem Schmelzebehälter zur Durchführung des Verfahrens; und

Fig. 4 eine schematische Schnittansicht durch eine weitere Ausführungsform einer erfindungsgemäßen Anlage an einem Schmelzebehälter; und

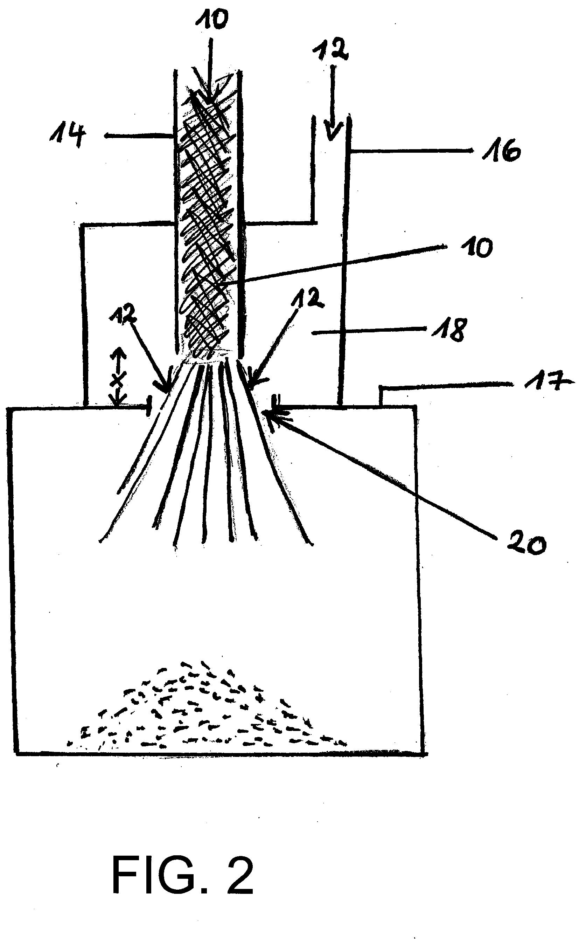

In Fig. 2 ist schematisch eine erfindungsgemäße Anlage dargestellt. Hier wird das fließfähige Material 10 durch eine Materialleitung 14 mit $P_{liq}$ gedrückt, während durch mindestens einen Gaskanal 16 Gas 12 unter hohem Druck $p_{gas}$ gefördert wird. Die Materialleitung 14 endet in der Gasdruckkammer 18 mit einem Abstand x von der Gasdruckkammeröffnung 20 in der im wstl. senkrecht zur Materialleitung 14 verlaufenden Gasdruckkammer Wand 17. Die Gasleitung 16 ermöglicht die Aufrechterhaltung eines Überdrucks in der Gasdruckkammer.

Es wird darauf hingewiesen, dass hier zur Vereinfachung lediglich eine Gasleitung und eine Materialleitung dargestellt wurden - selbstverständlich sind auch mehrere derartige Leitungen möglich.

Wichtig ist, dass durch die Auswahl der Verhältnisse eine kritische Strömung im Bereich der Öffnung der Gasdruckkammer entsteht, die dann zu einer sehr guten Zerstäubung führt.

Nachfolgend wird eine bevorzugte Ausführungsform der Erfindung anhand der Herstellung von Aluminiumpulver beschrieben - diese ist aber keineswegs auf diese Anwendung beschränkt - es kann nach diesem Verfahren ebenso anderes schmelzfähiges Material, wie Nickel, Zinn, Zink, Magnesium, Silicium, Titan, Metallegierungen, wie Bronze; Glas oder auch Gläser, schmelzbare Kunststoffe (Thermoplasten) Naturstoffe, wie Fette und Wachse sowie weitere Materialien wie Lösungen, Emulsionen, gepulvert werden.

Grundsätzlich ist jede geometrische Konfiguration, entsprechend der schematischen Darstellung der Fig. 2, für das erfindungsgemäße Verfahren geeignet. Bei einer bevorzugten Anwendungsform haben sich als günstig erwiesen:

$d_l$ = 2-10 mm
D = 6 bis 35 mm
x = 0 bis 10 mm

Dabei wird ausdrücklich darauf hingewiesen, dass die in Fig. 2 schematisch angedeuteten Flüsse unter den verschiedensten Winkeln zwischen 0° und 90° aufeinandertreffen können, genauso können mehrere Gaszuführungen vorgesehen werden. Wesentlich ist aber die innige Durchmischung der Fliessfähiges Material mit dem Gas und das Entstehen einer kritischen Strömung bei der Expansion.

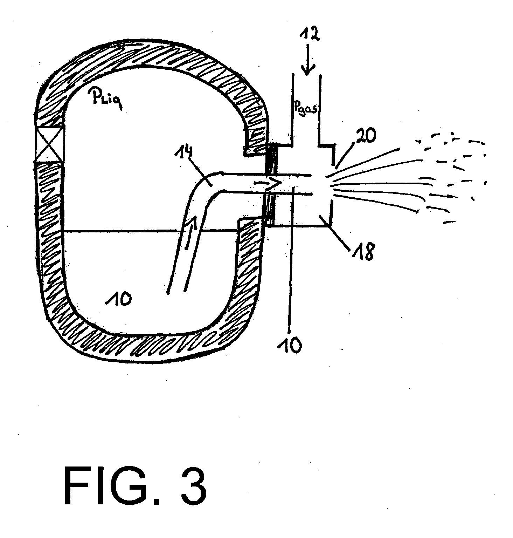

Wie in Fig. 3 gezeigt, wird ein mit flüssigem Aluminium gefüllter Druckbehälter mit Luft unter einen Druck von 3.7 bar gesetzt, wodurch durch das Steigrohr flüssiges Aluminium zur Anlagenöffnung 20 fließt. Dort kommt das flüssige Aluminium mit heißem Gas (T = 700°C, $p_{gas}$ = 6 bar) in Berührung und wird durch die hohen Relativgeschwindigkeit sowie die hohe Gasdichte an der Grenzfläche Gas/Flüssigkeit in feine Tröpfchen zerstäubt. Für eine Produktionsrate von 420 kg Al/h wurden ca 1250 kg Luft/h benötigt, um einen Partikeldurchmesser von $20 \mu m$ (versprüht, zusätzlich 4% $4 \mu m$ - Pulver) zu erzielen. Mit den herkömmlichen außenmischenden Zerstäubungsverfahren wird ein ähnliches Ergebnis bei der doppelten Luftmenge mit doppeltem Gasdruck erzielt (Tab.2). Das neue Verfahren hat hier also eine Energie-Einsparung von über 60% bewirkt.

Günstige Verhältnisse stellen sich bei Aluminium, verdüst mit Luft, bei einem DruckVerhältnis von $p_{gas}/p_{liq}$ zwischen 1 und 2 und einem Basisdruck von 2 - 15 bar ein - allerdings können auch höhere Drücke eingesetzt werden.

Wichtig ist beim Betrieb in erster Linie, Druck an der Grenzfläche Gas/Flüssigkeit zu erhöhen um eine vorteilhafte Zerstäubung zu gewährleisten. Auch sind sämtliche denkbare Gasdruckkammeröffnungskonturen (z.B. Abrundung, konvergent-divergent, oval oder schlitzförmig, ...) möglich.

Eine typische bei derartigen Anwendungen zur schlagartigen Expansion eingesetzte Anlage ist in Fig. 3 gezeigt. Deutlich ist hier der Zutritt von Gas 12 im Öffnungsbereich der Gas/Materialmischung zu erkennen, der zu einer besseren Führung des Stroms austretenden Materials führt und ein Festsetzen verfestigten Materials an der Anlage erheblich verringert.

Ausführungsbeispiel 1

Betrieb mit separater Gas- und Flüssigkeitsdruckregelung:

Wie in Fig. 3 gezeigt, wird ein mit flüssigem Aluminium gefüllter Druckbehälter mit Luft unter einen Druck von 3.7 bar gesetzt, wodurch durch das Steigrohr flüssiges Aluminium zur Anlagenöffnung (20) der erfindungsgemäßen Anlagenanordnung fördert. Dort kommt das flüssige Aluminium mit heißem Gas *(Luft)* (T = 700°C, $p_{gas}$ = 6 bar) in Berührung und wird durch die hohen Relativgeschwindigkeit sowie die hohe Gasdichte an der Grenzfläche Gas/Flüssigkeit in feine Tröpfchen zerstäubt.

Für eine Produktionsrate von 420 kg Al/h wurden ca. 1250 kg Luft/h benötigt, um einen Partikeldurchmesser von 20µm (versprüht, zusätzlich 4% 4µm - Pulver) zu erzielen. Mit den herkömmlichen außenmischenden Zerstäubungsverfahren wird ein ähnliches Ergebnis bei der doppelten Luftmenge mit doppeltem Gasdruck erzielt (Tab.2). Das neue Verfahren hat hier also demgegenüber eine Energie-Einsparung von über 60% bewirkt.

**Tab. 2 Energieverbrauch**

|  | Außenmisch-Verf. | erf. Anlage |
|---|---|---|
| Gasdruck (bar) | 13 | 6 |
| Gastemperatur (°C) | 700°C | 700°C |
| Gas/Flüssigkeit (kg/kg) | 7 | 3 |
| Energieverbrauch (kJ/kgAl) | 6500 | 2500 |
| Sphärizität(-) | 0,41 | 0,4 |
| Typ. O2-Gehalt(%) | 0,3 | 0,3 |

Wie aus obiger Tabelle ersichtlich, sind Sphärizität und Oxidgehalt mit dem außenmischender Verfahren vergleichbar, während weniger als die Hälfte Energie benötigt wird.

Ausführungsbeispiel 2

Betrieb mit einfacher Regelung

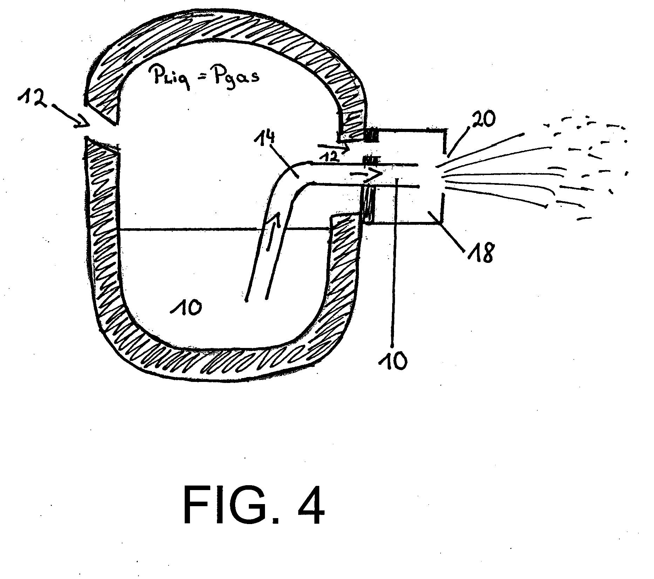

Wie in Fig. 4 gezeigt, wird ein mit flüssigem Aluminium gefüllter Druckbehälter mit Luft unter einen Druck von 3,8 bar gesetzt, wodurch durch das Steigrohr flüssiges Aluminium zur Anlagenöffnung 20) gedrückt wird. Durch Löcher an der hinteren Wand der Gasdruckkammer strömt Gas in die Gasdruckkammer. Dort kommt das flüssige Aluminium mit heißem Gas (T = 700°C, $p_{gas}$ = 6bar) in Berührung und wird durch die hohe Relativgeschwindigkeit sowie die hohe Gasdichte an der Grenzfläche Gas/Flüssigkeit in feine Tröpfchen zerstäubt.

Aufgrund des geringeren Gasdrucks liegt hier die Zerstäubungseffizienz nicht so optimal wie in Beispiel 3, die Betriebsweise ist jedoch sicherer und einfacher und die Investitionskosten sind geringer, als bei herkömmlichen Verfahren.

Überraschenderweise hat sich gezeigt, dass durch Verwendung einer Mischung Luft/fliessfähiges Material die Gaszufuhr beim Einsatz von Anlagen mit Gaszutritt beim Austritt des fliessfähigen Materials bei gleicher Ausbeute an Pulver stark verringert werden kann.

Selbstverständlich ist die Erfindung nicht auf die exakte Konstruktion oder die aufgeführten oder beschriebenen Ausführungsbeispiele begrenzt, sondern es sind unterschiedliche Abänderungen ohne Abweichen von Kern- und Schutzumfang der Erfindung für den Fachmann offensichtlich.

Bezugszeichenliste

10      fließfähiges Material
12      Gas
14      Schmelzekanal
16      Gaskanal
18      Gasdruckkammer
20      Öffnung von IP
d =     Durchmesser Schmelzekanal
D =     Durchmesser Düsenöffnung
x =     Länge der Mischkammer

**Patentansprüche**

1.  Verfahren zur steuerbaren Herstellung von Partikeln aus fliessfähigem Material mit:

    - Zuführen eines fliessfähigen Materials durch mindestens eine Materialleitung mit einem offenen Austrittsende in eine Gasdruckkammer mit einer Öffnung, die direkt in einen Verdüsungsraum öffnet,
    - Herstellen eines Gasdrucks in der Gasdruckkammer mit Öffnung, wobei im Bereich des Austrittsendes der Materialleitung das austretende Material durch das unter Druck stehende Gas zerstäubt wird;
    - Austritt der zerstäubten Material/Gas-Mischung unter kritischen Bedingungen aus der Öffnung der Gasdruckkammer unter weiterer Expansion der zerstäubten Gas/Material-Mischung in einen Verdüsungsraum unter Verfestigung der Schmelze und
    - Sammeln der so hergestellten Materialpartikel.

2.  Verfahren nach Anspruch 1, **dadurch gekennzeichnet, dass** das fließfähige Material eine Lösung, Schmelze, Schlamm, Suspension, Emulsion ist.

3.  Verfahren nach Anspruch 2, **dadurch gekennzeichnet, dass** das fließfähige Material schmelzfähiger Kunststoff; Metall, insbesondere ein unedles Metall oder Buntmetall sowie Legierungen derselben; ein Naturstoff, Schlacke, Glas, ist.

4.  Verfahren nach Anspruch 1, **dadurch gekennzeichnet, dass** das Austrittsende der Materialleitung in einem bestimmten Abstand x zur Gasdruckkammeröffnung anordenbar ist.

5.  Verfahren nach einem der vorangehenden Ansprüche, **dadurch gekennzeichnet, dass** das fließfähige Material in der Materialleitung unter Druck zugeführt wird.

6.  Verfahren nach Anspruch 1 oder 2, **dadurch gekennzeichnet, dass** die Partikelgrössenverteilung des Pulvers über das Druckverhältnis Material in der Materialleitung $P_{liq}$ und Gasdruck in der Gasdruckkammer $P_{gas}$ eingestellt wird.

7.  Verfahren nach einem der vorangehenden Ansprüche, **dadurch gekennzeichnet, dass** die Produktionsmenge/ Zeiteinheit und/oder der Partikelgrößenverteilung durch Einstellung des Abstands x zwischen dem Austrittsende der Materialleitung und der Gasdruckkammeröffnung geregelt wird.

8.  Verfahren nach einem der vorangehenden Ansprüche, **dadurch gekennzeichnet, daß** die Expansion aus der Gaskammeröffnung in einen Raum niedrigerer Temperatur als des fließfähigen Materials aus der Materialleitung durchgeführt wird.

9.  Verfahren nach einem der vorangehenden Ansprüche, **dadurch gekennzeichnet, daß** das Gas ein Inertgas, Edelgas, Stickstoff, Kohlendioxid, Luft, Wasserdampf ist.

10. Verdüsungsanlage zur Durchführung des Verfahrens nach einem oder mehreren der vorangehenden Ansprüche, **gekennzeichnet durch**:

    - mindestens eine Materialleitung (14) ;
    - mindestens eine offene Gasdruckkammer (18), deren mindestens eine Öffnung (20) zum Verdüsungsraum (30) weist

- mindestens einer Gasleitung (16), **durch** die Gas zur Aufrechterhaltung des Gasdrucks in der Gasdruckkammer (18) regelbar zugeführt wird,

wobei Gaszuführleitung(en) (16) und die Materialleitung(en) (14) im wesentlichen innerhalb der offenen Gasdruckkammer (18) enden und x der Abstand , gemessen zwischen dem Ende der Materialleitung (14) und der mindestens einen Öffnung (20) der Gasdruckkammer ist.

11. Anlage nach Anspruch 8, **dadurch gekennzeichnet, dass** der Abstand x einstellbar ist.

12. Anlage nach einem der Ansprüche 10 - 11, **gekennzeichnet durch** mehrere voneinander getrennt regelbare Gaszuführkanäle.

13. Anlage nach Anspruch 10 - 12, **dadurch gekennzeichnet, dass** die Gasleitungen Gasleiteinbauten aufweisen.

14. Anlage nach einem der vorangehenden Ansprüche, **gekennzeichnet durch** runde, konvergierende, konvergent-divergente, ovale, mehreckige oder schlitzförmige Gas- und/oder Materialleitungsgeometrien

FIG. 1

FIG. 2

FIG. 3

$P_{Liq} = P_{gas}$

FIG. 4

**Europäisches Patentamt**

# EUROPÄISCHER RECHERCHENBERICHT

Nummer der Anmeldung

EP 06 12 5514

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 103 39 545 A1 (ZAPF CREATION AG [DE]) 24. März 2005 (2005-03-24) * Absätze [0036], [0051], [0052], [0056], [0085]; Anspruch 1; Abbildung 1 * ----- | 1-14 | INV. B01J2/02 |
| A | EP 1 154 201 A (TRIBOVENT VERFAHRENSENTWICKLG [AT]) 14. November 2001 (2001-11-14) * Spalte 6, Zeile 25 - Zeile 30; Anspruch 1; Abbildung 1 * ----- | 1,10 | |
| A | GB 1 298 121 A (BASF AG [DE]) 29. November 1972 (1972-11-29) * Seite 4, Zeile 37 - Zeile 41; Anspruch 1; Abbildung 1 * ----- | 1,10 | |
| A | US 3 272 615 A (HOFFMAN DANIEL J N ET AL) 13. September 1966 (1966-09-13) * Spalte 2, Zeile 45 - Zeile 51; Anspruch 1; Abbildung 1 * ----- | 1,10 | |

|  |
|---|
| RECHERCHIERTE SACHGEBIETE (IPC) |
| B01J |

Der vorliegende Recherchenbericht wurde für alle Patentansprüche erstellt

| Recherchenort | Abschlußdatum der Recherche | Prüfer |
|---|---|---|
| Den Haag | 9. Mai 2007 | GILLIQUET, J |

## ANHANG ZUM EUROPÄISCHEN RECHERCHENBERICHT
## ÜBER DIE EUROPÄISCHE PATENTANMELDUNG NR.

EP 06 12 5514

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

09-05-2007

| Im Recherchenbericht angeführtes Patentdokument | Datum der Veröffentlichung | Mitglied(er) der Patentfamilie | Datum der Veröffentlichung |
|---|---|---|---|
| DE 10339545 A1 | 24-03-2005 | KEINE | |
| EP 1154201 A | 14-11-2001 | AT 408956 B | 25-04-2002 |
| | | AT 8252000 A | 15-09-2001 |
| | | US 2001044086 A1 | 22-11-2001 |
| GB 1298121 A | 29-11-1972 | AT 311667 B | 26-11-1973 |
| | | BE 749382 A1 | 23-10-1970 |
| | | CA 922465 A1 | 13-03-1973 |
| | | CH 504941 A | 31-03-1971 |
| | | DE 1920777 A1 | 12-11-1970 |
| | | FR 2039455 A5 | 15-01-1971 |
| | | JP 51022023 B | 07-07-1976 |
| | | NL 7006033 A | 27-10-1970 |
| | | SE 355521 B | 30-04-1973 |
| | | ZA 7002690 A | 27-01-1971 |
| US 3272615 A | 13-09-1966 | AT 251546 B | 10-01-1967 |
| | | DE 1254129 B | 16-11-1967 |
| | | GB 1051334 A | |
| | | LU 44172 A1 | 07-10-1963 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0162987 A
- AT 2987350 A1
- EP 1474224 B1
- DE 2627880